# EUROPÄISCHE PATENTSCHRIFT

(11) **EP 2 018 992 B1**
(45) Veröffentlichungstag und Bekanntmachung des Hinweises auf die Patenterteilung: **17.11.2010**
(21) Anmeldenummer: 08104481.0
(22) Anmeldetag: 19.06.2008
(51) Int. Cl.: B60K 37/02, G02B 27/00

(54) **Kraftfahrzeugcockpit**
Motor vehicle cockpit
Cockpit de véhicule automobile

(30) Priorität: 27.07.2007 DE 102007035769
(43) Veröffentlichungstag der Anmeldung: 28.01.2009
(73) Patentinhaber: Continental Automotive GmbH, 30165 Hannover (DE)
(72) Erfinder: Cieler, Stephan, 60316, Frankfurt (DE); Meier-Arendt, Guido, 63225, Langen (DE)

(56) Entgegenhaltungen:
- EP-A- 1 228 917
- DE-A1- 10 349 673
- DE-A1-102004 022 494
- DE-A1-102005 010 843
- DE-U1- 29 703 659

## Beschreibung

Die Erfindung bezieht sich auf ein Kraftfahrzeugcockpit mit einer Mehrzahl Anzeigeeinheiten zur Darstellung von Informationen, wobei die Anzeigeeinheiten an unterschiedlichen Positionen im Innenraum des Kraftfahrzeugs angeordnet sind, mit einer Steueranordnung, durch die Art und Inhalt der jeweils an einer Anzeigeeinheit dargestellten Information steuerbar ist.

Bei derartigen Kraftfahrzeugcockpits ist es bekannt, mittels eines Dreh-Drückstellers die Art und den Inhalt der jeweils an einer Anzeigeeinheit dargestellten Information zu steuern.

Die Bedienung des Dreh-Drückstellers erfordert aber in einem bestimmten Umfang eine Ablenkung des Fahrers vom Fahrgeschehen und kann dadurch Ursache von Unfällen sein.

Aus DE 10 2005 010 843 A1 ist ein Head-Up-Display eines Kraftfahrzeuges bekannt, bei welchem Information als bildhafte Meldung mittels der Windschutzscheibe in das Sichtfeld des Fahrers eingebracht wird, wobei durch eine Aktion des Fahrers die bildhafte Meldung als wiederaufrufbares Icon in einer Iconleiste abgelegt wird. In einer Ausführungsform wird dabei vorgeschlagen, dass die Fahreraktion durch eine Handbewegung des Fahrers gebildet wird.

Die DE 10 2005 010 843 A1 offenbart ein Kraftfahrzeugcockpit mit einer Mehrzahl Anzeigeeinheiten zur Darstellung von informationen, wobei die Anzeigeeinheiten an unterschiedlichen Positionen im Innenraum des Kraftfahrzeugs angeordnet sind, mit einer Steueranordnung, durch die Art und Inhalt der jeweils an einer Anzeigeeinheit dargestellten Information steuerbar ist, wobei von einem Aufnahmemittel eine Zuordnung eines Gliedes eines Benutzers zu einer ersten Anzeigeeinheit erfassbar und die Information der Änderung der Zuordnung der Steueranordnung zuleitbar ist und von der Steueranordnung entsprechend der Änderung der Zuordnung die weitere Anzeigeeinheit zur Darstellung der Information der ersten Anzeigeeinheit ansteuerbar ist.

Aufgabe der Erfindung ist es daher, ein Kraftfahrzeugcockpit der eingangs genannten Art zu schaffen, durch das besonders ablenkungsfrei und einfach handhabbar eine Umschaltung der Darstellung von Informationen einer Anzeigeeinheit auf eine andere Anzeigeeinheit erfolgt.

Diese wird erfindungsgemäß gelöst mit einem die Merkmale des Anspruchs 1 aufweisenden Kraftfahrzeugcockpit.

Damit ist eine Umschaltung der Darstellung von Informationen einer Anzeigeeinheit auf eine andere Anzeigeeinheit möglich, ohne dass der Benutzer seinen Blick vom Fahrgeschehen abwenden und ohne, dass er mit seiner Hand einen Dreh-Drücksteller suchen und bedienen muss.

Damit erfolgt zumindest weitestgehend keine Ablenkung vom Fahrgeschehen.

Die Bedienung ist einfach und sehr leicht erlernbar.

Ohne großen Aufwand können die Darstellungen den einzelnen Anzeigeeinrichtungen nach dem persönlichen Bedürfnis zugeordnet werden.

Das an dem Glied des Benutzers angeordnete Objekt kann z. B. ein besonders gut von dem Aufnahmemittel erfassbares Teil wie z. B. ein Armband oder ein Ring sein.

Die Zuordnung des Gliedes des Benutzers und/oder eines an dem Glied angeordneten Objektes erfolgt durch ein Richten des Gliedes und/oder eines an dem Glied angeordneten Objektes auf die Anzeigeeinheit .

Die gestikabhängige Veränderung der Zuordnung erfolgt durch eine Bewegung des Gliedes und/oder eines an dem Glied angeordneten Objektes aus einer auf die erste Anzeigeeinheit gerichteten Position in eine auf die weitere Anzeigeeinheit gerichtete Position.

Ist das Glied des Benutzers eine Hand und/oder ein Arm des Benutzers, so sind keine zusätzlichen Objekte erforderlich.

Zur visuellen Erfassung der Zuordnung und Veränderung der Zuordnung des Gliedes des Benutzers sowie zu deren Auswertung kann das Aufnahmemittel eine Videokamera sein und die Steueranordnung eine Bildverarbeitungseinheit aufweisen.

Aufgrund der Auswertung erfolgt dann eine Ansteuerung zum Umschalten der Darstellung.

Um dem Benutzer zu signalisieren, dass sein Befehl erfasst wurde, kann die Zuordnung des Gliedes des Benutzers und/oder eines an dem Glied angeordneten Objektes auf die Anzeigeeinheit durch ein Bestätigungssignal bestätigbar sein.

Dabei kann das Bestätigungssignal visuell an der Anzeigeeinheit darstellbar und/oder akustisch anzeigbar sein.

Möglichkeiten von Anzeigeeinheiten können ein frontseitig vor dem Fahrersitz angeordnetes Kombinationsinstrument und/oder ein Display im mittigen Bereich einer Armaturentafel und/oder ein Display in einer Mittelkonsole und/oder ein Head-up-Display sein.

Um z. B. im unmittelbaren Gesichtsfeld die Darstellung von ablenkenden Informationen geringer Priorität zu vermeiden, sind vorzugsweise den Anzeigeeinheiten Anzeigeprioritäten unterschiedlichen Grades und den darstellbaren Informationen entsprechend Informationsprioritäten unterschiedlichen Grades zugeordnet, wobei durch eine Anzeigeeinheit nur Informationen darstellbar sind, deren Grad der Informationspriorität gleich oder höher ist als der Grad der Anzeigepriorität dieser Anzeigeeinheit.

Dabei können die darstellbaren Informationen Entertainmentinformationen wie z. B. Radiosenderanzeige oder MP3-Titel-anzeige und/oder Bordcomputerinformationen wie z. B. Reichweite oder Durchschnittskraftstoffverbrauch und/oder Navigationsinformationen wie Pfeilsymbol oder Entfernung zum nächsten Abbiegepunkt oder aktuell befahrene Straße sein.

Die Steueranordnung kann bei Stillstand des Kraftfahrzeugs und/oder des Antriebsmotors des Kraftfahrzeugs inaktiv geschaltet sein.

Ein Ausführungsbeispiel der Erfindung wird in der Zeichnung dargestellt und ist im Folgenden näher beschrieben. Es zeigen
- Figuren 1 - 5: eine Prinzipdarstellung eines Kraftfahrzeug- cockpits in den verschiedenen Phasen einer Um- schaltung einer Darstellung von Informationen von einer Anzeigeeinheit auf eine andere An- zeigeeinheit und
- Figur 6: eine Prinzipdarstellung des Kraftfahrzeugcock- pits nach Figur 1 mit Kenntlichmachung aller möglichen Anzeigeeinheiten.

Das in den Figuren dargestellte Kraftfahrzeugcockpit weist eine Armaturentafel 1 auf, vor der ein Lenkrad 2 angeordnet ist.

Im Bereich des Lenkrades 2 ist an der Armaturentafel 1 ein Kombinationsinstrument 3 angeordnet, das ein erstes Display 4 aufweist.

Rechts neben der durch das Lenkrad 2 angedeuteten Position eines Fahrers befindet sich eine Mittelkonsole 5, die ein zweites Display 6 aufweist.

Über der Armaturentafel 1 befindet sich eine Windschutzscheibe 7.

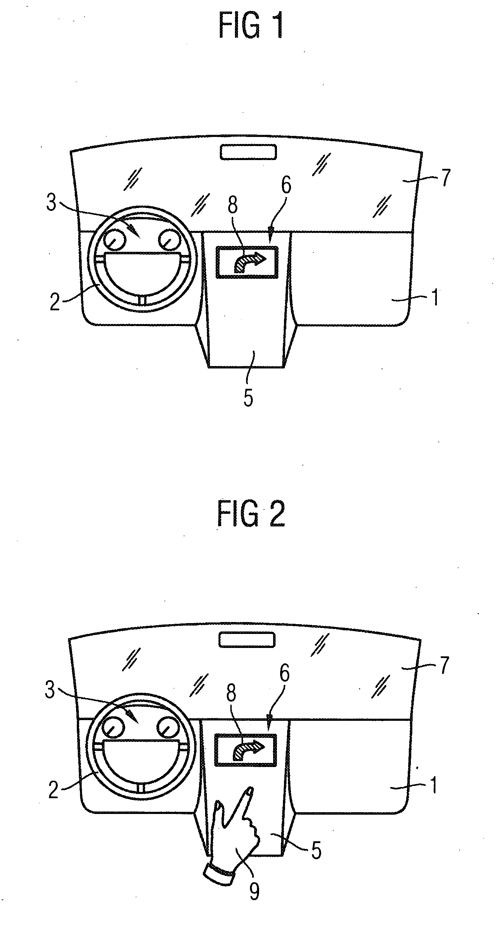

In Figur 1 wird an dem zweiten Display 6 im Bereich der Mittelkonsole 5 eine visuelle Manöverinformation eines Navigationssystems als rechtsabbiegender Pfeil 8 dargestellt.

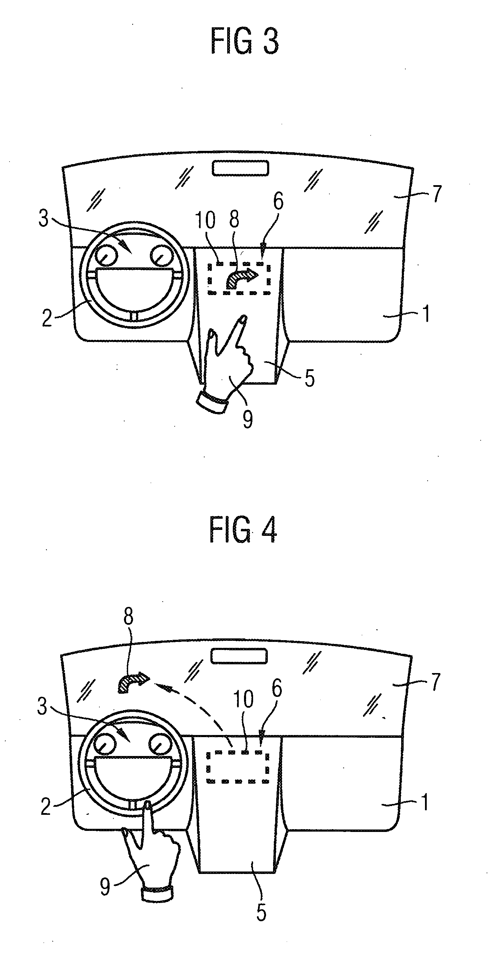

In Figur 2 wird von dem Fahrer als Benutzer mit der rechten Hand 9 auf das zweite Display 6 gezeigt, wobei in Figur 3 durch Anzeige einer gepunkteten Umrandung 10 des zweiten Displays 6 visuell angezeigt wird, dass die Zuordnung der Hand 9 zum zweiten Display 6 von einer nicht dargestellten Videokamera erfasst und deren Signal in einer Bildverarbeitungseinheit in einer nicht dargestellten Steueranordnung verarbeitet wurde, um die Umrandung 10 als Bestätigungssignal anzusteuern.

Eine Bewegung der Hand 9 von ihrer Ausrichtung auf das zweite Display 6 zu einer Ausrichtung auf den Bereich der Windschutzscheibe 7 vor der Fahrerposition (Figur 4) wird ebenfalls von der Videokamera erfasst, von der Bildverarbeitungseinheit verarbeitet und durch die Steueranordnung die bisherige Darstellung des Pfeils 8 auf dem zweiten Display 6 von dem zweiten Display 6 zur Darstellung im Bereich der Windschutzscheibe 7 durch eine nicht dargestellte Head-up-Einrichtung umgesteuert.

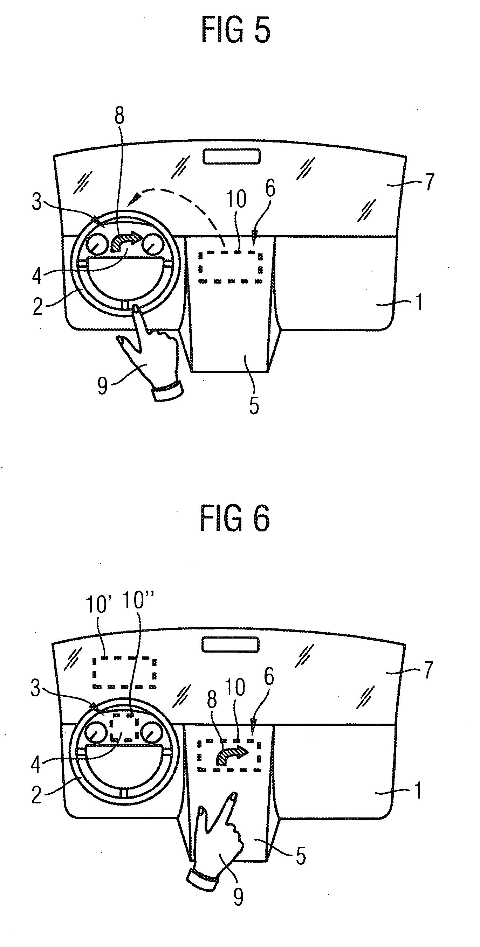

Alternativ kann entsprechend Figur 5 bei einer Bewegung der Hand 9 von ihrer Ausrichtung auf das zweite Display 6 zur einer Ausrichtung auf das erste Display 4 im Kombinationsinstrument 3 von der Videokamera erfasst, von der Bildverarbeitungseinheit entsprechend verarbeitet und durch die Steueranordnung die bisherige Darstellung des Pfeils 8 auf dem zweiten Display 6 von dem zweiten Display 6 zur Darstellung auf dem ersten Display 4 umgesteuert werden.

In Figur 6 ist dargestellt, dass bei einer Ausrichtung der Hand 6 auf eine der Anzeigeeinheiten - hier dem zweiten Display 6 - auch an allen vorhandenen weiteren Anzeigeeinheiten - hier dem ersten Display 4 und dem Head-up-Display im Bereich der Windschutzscheibe 7 - ein Bestätigungssignal in Form einer Umrand 10, 10' und 10'' an jeder der Anzeigeeinheiten angesteuert wird. Dadurch sind dem Fahrer alle Anzeigeeinheiten aufgezeigt, auf die er die Darstellung des zweiten Displays umschalten kann.

## Patentansprüche

1. Kraftfahrzeugcockpit mit einer Mehrzahl Anzeigeeinheiten (4, 6, 7) zur Darstellung von Informationen, wobei die Anzeigeeinheiten (4, 6, 7) an unterschiedlichen Positionen im Innenraum des Kraftfahrzeugs angeordnet sind, mit einer Steueranordnung, durch die Art und Inhalt der jeweils an einer Anzeigeeinheit dargestellten Information steuerbar ist, wobei von einem Aufnahmemittel eine Zuordnung eines Gliedes (9) eines Benutzers und/oder eines an dem Glied (9) angeordneten Objektes zu einer ersten Anzeigeeinheit (6) so wie eine gestikabhängige Veränderung der Zuordnung zu einer weiteren Anzeigeeinheit (4, 7) berührungslos erfassbar und die Information der Änderung der Zuordnung der Steueranordnung zuleitbar ist und von der Steueranordnung entsprechend der Änderung der Zuordnung die weitere Anzeigeeinheit (4, 7) zur Darstellung der Information der ersten Anzeigeeinheit (6) ansteuerbar ist, wobei
die Zuordnung des Gliedes (9) des Benutzers und/oder des an dem Glied (9) angeordneten Objektes durch ein Richten des Gliedes (9) und/oder des an dem Glied (9) angeordneten Objektes auf die Anzeigeeinheit (4, 6, 7) erfolgt und wobei
die gestikabhängige Veränderung der Zuordnung durch eine Bewegung des Gliedes (9) und/oder des an dem Glied (9) angeordneten Objektes aus einer auf die erste Anzeigeeinheit (6) gerichteten Position in eine auf die weitere Anzeigeeinheit (4, 7) gerichtete Position erfolgt.

2. Kraftfahrzeugcockpit nach einem der vorhergehenden Ansprüche, **dadurch gekennzeichnet, dass** das Glied (9) es Benutzers eine Hand und/oder ein Arm des Benutzers ist.

3. Kraftfahrzeugcockpit nach einem der vorhergehenden Ansprüche, **dadurch gekennzeichnet, dass** das Aufnahmemittel eine Videokamera ist und die Steueranordnung eine Bildverarbeitungseinheit aufweist.

4. Kraftfahrzeugcockpit nach einem der vorhergehenden Ansprüche, **dadurch gekennzeichnet, dass** die Zuordnung des Gliedes (9) des Benutzers und/oder eines an dem Glied (9) angeordneten Objektes auf die Anzeigeeinheit durch ein Bestätigungssignal bestätigbar ist.

5. Kraftfahrzeugcockpit nach Anspruch 4, **dadurch gekennzeichnet, dass** das Bestätigungssignal visuell an der Anzeigeeinheit darstellbar und/oder akustisch anzeigbar ist.

6. Kraftfahrzeugcockpit nach einem der vorhergehenden Ansprüche, **dadurch gekennzeichnet, dass** die Anzeigeeinheit ein frontseitig vor dem Fahrersitz angeordnetes Kombinationsinstrument (3) und/oder ein Display im mittigen Bereich einer Armaturentafel und/oder ein Display in einer Mittelkonsole (5) und/oder ein Head-up-Display ist.

7. Kraftfahrzeugcockpit nach einem der vorhergehenden Ansprüche, **dadurch gekennzeichnet, dass** den Anzeigeeinheiten (4, 6, 7) Anzeigepriortäten unterschiedlichen Grades und den darstellbaren Informationen entsprechend Informationsprioritäten unterschiedlichen Grades zugeordnet sind, wobei durch eine Anzeigeeinheit (4, 6, 7) nur Informationen darstellbar sind, deren Grad der Informationspriorität gleich oder höher ist als der Grad der Anzeigepriorität dieser Anzeigeeinheit (4, 6, 7).

8. Kraftfahrzeugcockpit nach Anspruch 7, **dadurch gekennzeichnet , dass** darstellbare Informationen Entertainmentinformationen wie z. B. Radiosenderanzeige oder MP3-Titelanzeige und/oder Bordcomputerinformationen wie z. B. Reichweite oder Durchschnittskraftstoffverbrauch und/oder Navigationsinformationen wie Pfeilsymbol oder Entfernung zum nächsten Abbiegepunkt oder aktuell befahrene Straße sind.

9. Kraftfahrzeugcockpit nach einem der vorhergehenden Ansprüche, **dadurch gekennzeichnet, dass** die Steueranordnung bei Stillstand des Kraftfahrzeugs und/oder des Antriebsmotors des Kraftfahrzeugs inaktiv geschaltet ist.

## Claims

1. Motor vehicle cockpit having a number of display units (4, 6, 7) for displaying information, wherein the display units (4, 6, 7) are arranged at different positions in the passenger compartment of the motor vehicle, having a control arrangement by means of which the type and content of the information which is respectively displayed on a display unit can be controlled, wherein a recording means can sense in a contactless fashion an assignment of a user's limb (9) and/or of an object arranged on the limb (9) to a first display unit (6) and a gesture-dependent change in the assignment to a further display unit (4, 7), and the information relating to the change in the assignment can be fed to the control arrangement, and the further display unit (4, 7) can be actuated to display the information of the first display unit (6) by the control arrangement in accordance with the change in the assignment, wherein the assignment of the user's limb (9) and/or of the object arranged on the limb (9) is effected by aiming the limb (9) and/or the object arranged on the limb at the display unit (4, 6, 7), and wherein the gesture-dependent change in the assignment is effected by means of a movement of the limb (9) and/or of the object arranged on the limb (9) from a position in which it is aimed at the first display unit (6) into a position in which it is aimed at the further display unit (4, 7).

2. Motor vehicle cockpit according to the preceding claim, **characterized in that** the user's limb (9) is one of the user's hands and/or arms.

3. Motor vehicle cockpit according to one of the preceding claims, **characterized in that** the recording means is a video camera, and the control arrangement has an image processing unit.

4. Motor vehicle cockpit according to one of the preceding claims, **characterized in that** the assignment of the user's limb (9) and/or of an object arranged on the limb (9) to the display unit can be confirmed by means of a confirmation signal.

5. Motor vehicle cockpit according to Claim 4, **characterized in that** the confirmation signal can be displayed visually on the display unit and/or indicated acoustically.

6. Motor vehicle cockpit according to one of the preceding claims, **characterized in that** the display unit is a combination instrument (3) which is arranged at the front side in front of the driver's seat and/or a display in the central region of a dashboard and/or a display in a center console (5) and/or a head-up display.

7. Motor vehicle cockpit according to one of the preceding claims, **characterized in that** the display units (4, 6, 7) are assigned display priorities of a different degree, and the information which can be displayed is correspondingly assigned information priorities of a different degree, wherein a display unit (4, 6, 7) can only display information whose degree of priority is the same as or higher than the degree of the display priority of this display unit (4, 6, 7).

8. Motor vehicle cockpit according to Claim 7, **characterized in that** information which can be displayed is entertainment information such as, for example, a radio transmitter indication or MP3 title indication and/or on-board computer information such as, for example, range or average fuel consumption and/or navigation information such as an arrow symbol or distance from the next turning point or road on which the vehicle is currently traveling.

9. Motor vehicle cockpit according to one of the preceding claims, **characterized in that** the control arrangement is deactivated when the motor vehicle and/or the drive engine of the motor vehicle is in a stationary state.

## Revendications

1. Cockpit (ou poste de pilotage) de véhicule automobile comportant une pluralité d'unités d'affichage (4, 6, 7) destinées à représenter des informations, les unités d'affichage (4, 6, 7) étant disposées à différents endroits à l'intérieur du véhicule automobile, un système de commande, grâce auquel le genre et le contenu de chaque information représentée sur une unité d'affichage peuvent être commandés, où un moyen d'enregistrement peut détecter sans contact une concordance entre un membre (9) d'un utilisateur et/ou un objet placé sur ce membre (9) et une première unité d'affichage (6), ainsi qu'une modification, dépendant de la gestique, de la concordance avec une autre unité d'affichage (4, 7) et où l'information relative à la modification de la concordance peut être communiquée au système de commande et le système de commande peut, en fonction de la modification de la concordance, activer l'autre unité d'affichage (4, 7) pour la représentation de l'information de la première unité d'affichage (6), où la concordance du membre (9) de l'utilisateur et/ou de l'objet placé sur ce membre (9) est réalisée en pointant le membre (9) et/ou l'objet placé sur le membre (9) sur l'unité d'affichage (4, 6, 7) et où la modification, dépendant de la gestique, de la concordance a lieu par un mouvement du membre (9) et/ou de l'objet placé sur le membre (9), partant d'une position pointée sur une première unité d'affichage (6) et aboutissant à une position pointée sur l'autre unité d'affichage (4, 7).

2. Cockpit de véhicule automobile selon l'une des revendications précédentes, **caractérisé par le fait que** le membre (9) de l'utilisateur est une main et/ou un bras de l'utilisateur.

3. Cockpit de véhicule automobile selon l'une des revendications précédentes, **caractérisé par le fait que** le moyen d'enregistrement est une caméra vidéo et que le système de commande comporte une unité de traitement de l'image.

4. Cockpit de véhicule automobile selon l'une des revendications précédentes, **caractérisé par le fait que** la concordance entre le membre (9) de l'utilisateur et/ou un objet placé sur ce membre (9) et l'unité d'affichage est confirmée par un signal de confirmation.

5. Cockpit de véhicule automobile selon la revendication 4, **caractérisé par le fait que** le signal de confirmation peut être représenté visuellement sur l'unité d'affichage et/ou peut être édité acoustiquement.

6. Cockpit de véhicule automobile selon l'une des revendications précédentes, **caractérisé par le fait que** l'unité d'affichage est un instrument combiné (3) disposé à l'avant du véhicule devant le siège du conducteur et/ou un écran dans la partie centrale d'un tableau de bord et/ou un écran dans une console centrale (5) et/ou un écran d'affichage tête haute.

7. Cockpit de véhicule automobile selon l'une des revendications précédentes, **caractérisé par le fait que** des priorités d'affichage de différents degrés sont affectées aux unités d'affichage (4, 6, 7) et des priorités d'information de différents degrés sont affectées d'une façon correspondante aux informations à représenter, une unité d'affichage (4, 6, 7) ne pouvant représenter que des informations dont le degré de priorité d'information est égal ou supérieur au degré de priorité d'affichage de cette unité d'affichage (4, 6, 7).

8. Cockpit de véhicule automobile selon la revendication 7, **caractérisé par le fait que** les informations pouvant être représentées sont des informations de distraction, telles que, par exemple, des affichages relatifs aux émetteurs radio ou des affichage de titres d'enregistrements MP3 et/ou des informations provenant de l'ordinateur de bord, telles que, par exemple, le rayon d'action ou la consommation moyenne en carburant et/ou des informations de navigation, telles qu'un symbole de flèche ou la distance jusqu'au prochain point de changement de direction ou la route parcourue en temps réel.

9. Cockpit de véhicule automobile selon l'une des revendications précédentes, **caractérisé par le fait que** le système de commande est désactivé lorsque le véhicule automobile et/ou le moteur du véhicule automobile sont arrêtés.
